# EUROPÄISCHE PATENTSCHRIFT

(11) **EP 3 253 705 B1**
(45) Veröffentlichungstag und Bekanntmachung des Hinweises auf die Patenterteilung: **01.04.2020**
(21) Anmeldenummer: 16702924.8
(22) Anmeldetag: 03.02.2016
(51) Int. Cl.: B66C 1/66

(54) **TRANSPORTSYSTEM MIT EINEM UNBEMANNTEN LUFTFAHRZEUG UND EINER GREIFVORRICHTUNG ZUR AUFNAHME VON STÜCKGÜTERN VON OBEN, UND VERFAHREN ZUR AUFNAHME VON STÜCKGÜTERN UNTER VERWENDUNG DIESES TRANSPORTSYSTEMS**
TRANSPORT SYSTEM WITH AN UNMANNED AERIAL VEHICLE AND A GRIPPING DEVICE FOR PICKING UP PIECE GOODS FROM ABOVE, AND METHOD FOR PICKING UP PIECE GOODS USING THIS TRANSPORT SYSTEM
SYSTÈME DE TRANSPORT AVEC UN VÉHICULE AÉRIEN SANS PILOTE ET UN DISPOSITIF DE PRÉHENSION POUR PRÉLEVER DES CHARGES ISOLÉES, PAR LE DESSUS, ET MÉTHODE POUR PRÉLEVER DES CHARGES ISOLÉES, UTILISANT CE SYSTÈME DE TRANSPORT

(30) Priorität: 06.02.2015 DE 102015202181
(43) Veröffentlichungstag der Anmeldung: 13.12.2017
(73) Patentinhaber: Fraunhofer-Gesellschaft zur Förderung der angewandten Forschung e.V., 80686 München (DE)
(72) Erfinder: WRYCZA, Philipp, 45731 Waltrop (DE); FIEDLER, Martin, 44139 Dortmund (DE); ROTGERI, Mathias, 44263 Dortmund (DE); DÖLTGEN, Martin, 44388 Dortmund (DE)
(74) Vertreter: Pfenning, Meinig & Partner mbB
(86) Internationale Anmeldenummer: PCT/EP2016/052312
(87) Internationale Veröffentlichungsnummer: WO 2016/124658

(56) Entgegenhaltungen:
- CA-A- 925 906
- FR-A1- 2 210 563
- GB-A- 2 214 158
- SU-A1- 1 379 233
- US-A- 4 121 868
- US-A- 4 547 163
- US-A1- 2007 222 244
- US-A1- 2013 299 640

## Beschreibung

Die Erfindung betrifft ein Transportsystem mit einem unbemannten Luftfahrzeug und einer Greifvorrichtung zur Aufnahme von Stückgut von oben, nach dem Anspruch 1. Außerdem betrifft die Erfindung ein Verfahren zur Aufnahme von Stückgut von oben unter Verwendung dieses Transportsystems, nach dem Anspruch 9.

Eine aus dem Stand der Technik bekannte Vorrichtung zur Aufnahme von Stückgut von oben ist in der Druckschrift KR20140115711 A beschrieben. Diese Vorrichtung umfasst ein unbemanntes Luftfahrzeug sowie eine Greifvorrichtung. Die Greifvorrichtung ist an einer Unterseite des Luftfahrzeugs angebracht und umfasst bewegliche Greifelemente, welche eingerichtet sind, das Stückgut durch eine Einwärtsbewegung der Greifelemente aufzunehmen. Die Greifelemente sind dabei als Zangenarme ausgeführt.

Eine derartige Greifvorrichtung ist für die Aufnahme von Stückgut allerdings nur in bedingter Weise geeignet, insbesondere bei der Verwendung an einem Luftfahrzeug, wie einer Drohne. Die Schwierigkeit liegt einerseits darin begründet, dass die Zangenarme bei der Aufnahme lediglich eine geringe Kontaktfläche mit dem Stückgut bilden, was dazu führen kann, dass das aufgenommene Stückgut unsicher gehalten wird. Andererseits kann ein zielgenaues Heranführen der Greifvorrichtung an das Stückgut eine besondere Herausforderung darstellen, insbesondere bei Verwendung der Greifvorrichtung an einer Drohne in einer Umgebung mit starker Luftbewegung.

Andere Greifvorrichtungen sind aus den Druckschriften US 2007/222244 A1, FR 2 210 563 A1, SU 1 379 233 A1, US 2013/299640 A1 und GB 2 214 158 A bekannt.

Aufgabe der vorliegenden Erfindung ist es, eine Vorrichtung vorzuschlagen, die sich zur Aufnahme von Stückgut von oben eignet, wobei die Greifvorrichtung einerseits vor der Aufnahme präzise an das zu fassende Stückgut herangeführt werden kann und andererseits das Stückgut nach der Aufnahme sicher hält. Außerdem liegt der Erfindung die Aufgabe zugrunde, ein entsprechendes Verfahren zur Aufnahme von Stückgut von oben vorzuschlagen.

Diese Aufgabe wird durch ein Transportsystem mit den Merkmalen des Hauptanspruchs, umfassend ein unbemanntes Luftfahrzeug und eine Greifvorrichtung, sowie durch ein Verfahren mit den Merkmalen des Anspruchs 9 gelöst. Vorteilhafte Weiterbildungen ergeben sich mit den Merkmalen der abhängigen Ansprüche und des Ausführungsbeispiels.

Die Greifvorrichtung des vorgeschlagenen Transportsystems umfasst bewegliche Greifelemente zum Greifen des Stückguts durch eine Einwärtsbewegung der Greifelemente. Die Greifvorrichtung ist eingerichtet, Stückgut von oben aufzunehmen, und erlaubt insbesondere ein zielgenaues Heranführen der Greifvorrichtung an das Stückgut sowie ein sicheres Halten des aufgenommen Stückguts. Zu diesem Zweck sind die Greifelemente um eine durch die Greifelemente begrenzte Aufnahmeöffnung herum angeordnet, wobei die Greifvorrichtung unterhalb der Aufnahmeöffnung ein die Aufnahmeöffnung umgebendes Führungsmittel zur seitlichen Führung der Greifvorrichtung bei einer Annäherung der Greifvorrichtung an das Stückgut aufweist. Dabei ist ein innerer Durchmesser des Führungsmittels an einem unteren Ende des Führungsmittels größer als ein größtmöglicher Durchmesser der Aufnahmeöffnung.

Zusätzlich verjüngt sich der innere Durchmesser des Führungsmittels nach oben hin. Hierbei ist der innere Durchmesser typischerweise auch an einem oberen Ende des Führungsmittels noch mindestens so groß wie der größtmögliche Durchmesser der Aufnahmeöffnung.

Dementsprechend vorteilhaft ist das vorgeschlagene Verfahren zur Aufnahme von Stückgut. Bei diesem Verfahren nähert sich die Greifvorrichtung von oben so an das Stückgut an, dass die Aufnahmeöffnung über einem exponierten Teil des Stückguts oder einem am Stückgut befestigten Adapter durch eine seitliche Führung am Führungselement zentriert wird. Dadurch senkt sich die Greifvorrichtung in der Weise, dass die Greifelemente den exponierten Teil des Stückguts bzw. den am Stückgut befestigten Adapter umgeben, woraufhin die Greifelemente einwärts bewegt werden, so dass die Greifvorrichtung den exponierten Teil des Stückguts bzw. den am Stückgut befestigten Adapter anschließend so hält, dass das Stückgut bei einer folgenden Aufwärtsbewegung der Greifvorrichtung angehoben wird.

Typischerweise sind die Greifelemente jeweils an einem Ende um eine vertikale Achse schwenkbar ausgeführt zum irisblendenartigen Verkleinern oder Vergrößern der Aufnahmeöffnung. Durch diese Ausgestaltung wird ein gleichmä-ßiges Umschließen des gehaltenen Stückguts beziehungsweise eines am Stückgut befestigten Adapters von mehreren Seiten erreicht. Vorzugsweise wird die Greifvorrichtung dabei mindestens drei Greifelemente aufweisen. Es können aber natürlich auch vier, fünf oder mehr Greifelemente vorgesehen sein, um die Aufnahmeöffnung zu begrenzen.

Die Vorteile der Greifvorrichtung kommen in dem vorgeschlagenen Transportsystem mit dem unbemannten Luftfahrzeug bzw. einer Drohne besonders zum Tragen, weil es sich gerade beim Aufnehmen von Lasten durch Luftfahrzeuge regelmäßig als schwierig erweist, das jeweilige Luftfahrzeug bzw. eine daran befestigte Greifvorrichtung hinreichend genau über dem aufzunehmenden Stückgut abzusenken, um das Stückgut sicher aufzunehmen.

In der Regel sind die Greifelemente im Wesentlichen rotationssymmetrisch um eine durch einen Mittelpunkt der Aufnahmeöffnung verlaufende vertikale Achse angeordnet, so dass eine Aufnahme des Stückguts keine bestimmte Orientierung des Luftfahrzeugs innerhalb der horizontalen Ebene relativ zum aufzunehmenden Stückgut erfordert. Typischerweise ist zu diesem Zweck auch das Führungsmittel rotationssymmetrisch ausgeführt.

Es kann in manchen Ausführungen vorgesehen sein, dass das Luftfahrzeug und die Greifvorrichtung entlang der durch den Mittelpunkt der Aufnahmeöffnung verlaufenden Achse eine durchgehende Öffnung aufweisen.

Typischerweise kann das Führungsmittel in Form einer Mantelfläche eines Kegelstumpfes ausgeführt sein. Durch eine solche Ausführung wird eine verbesserte seitliche Führung der Greifvorrichtung bei Annäherung der Greifvorrichtung an das Stückgut erreicht.

Typischerweise umfasst die Greifvorrichtung einen elektrischen Antrieb und/oder einen pneumatischen Antrieb zum Bewegen der Greifelemente. Der Antrieb ist typischerweise durch eine Steuereinheit steuerbar, die beispielsweise als Teil der Greifvorrichtung oder des Luftfahrzeugs ausgeführt sein kann. In dieser Ausführung eignet sich die Greifvorrichtung beispielsweise für eine autonome Aufnahme des Stückguts durch das unbemannte Luftfahrzeug.

Es kann vorgesehen sein, dass die Greifvorrichtung einen Antrieb, insbesondere einen elektrischen und/oder einen pneumatischen Antrieb, zum synchronen Bewegen der Greifelemente umfasst. Vorteilhaft ist eine synchrone Einwärtsbewegung der Greifelemente insofern, als sich das Stückgut dadurch besonders gut seitlich in Bezug auf die vertikalen Achsen zentrieren lässt. Der Antrieb kann beispielsweise als Elektromotor ausgeführt sein.

Zweckmäßigerweise kann außerdem ein Mittel zur optischen Datenerfassung vorgesehen sein. Diese kann dazu eingerichtet sein, auf einem aufgenommenen Stückgut dargestellte Daten zu erfassen. So kann an der Greifvorrichtung beispielsweise ein Barcodelesegerät vorgesehen sein, weiches die in einem auf dem Stückgut aufgebrachten Barcode codierten Daten automatisiert erfassen kann. Das Mittel zur optischen Datenerfassung kann beispielsweise eine Kamera sein. Es kann zum Beispiel vorgesehen sein, dass durch die Kamera aufgenommene Bild- oder Videodaten ausgewertet werden für eine autonome Ansteuerung des Stückguts oder eines an dem Stückgut befestigten Adapters durch das unbemannte Luftfahrzeug. Typischerweise ist die Kamera oberhalb der Aufnahmeöffnung, beispielsweise in der durch den Mittelpunkt der Aufnahmeöffnung verlaufenden vertikalen Achse, angeordnet und nach unten ausgerichtet. Es ist selbstverständlich auch möglich, dass das Mittel zur optischen Datenerfassung als Teil des Luftfahrzeugs ausgebildet ist.

Zusätzlich zu dem oben beschriebenen Mittel zur optischen Datenerfassung oder alternativ dazu kann das Luftfahrzeug auch eine weitere Kamera aufweisen. Die weitere Kamera kann beispielsweise derart ausgerichtet sein, dass ein Erfassungsbereich der weiteren Kamera nicht durch ein Stückgut verdeckt wird, während dieses durch die Greifvorrichtung gehalten wird. Die weitere Kamera kann beispielsweise zur Erfassung von Video- oder Bilddaten zur Steuerung der Drohne eingerichtet sein. Beispielsweise kann hierbei eine Auswertung von erfassten Bilddaten farblich markierter Landebereiche beziehungsweise Abgabezonen erfolgen.

In typischen Ausführungen kann das Führungsmittel an einem unteren Ende eine ein- oder mehrteilige Standfläche aufweisen. Die Standfläche kann in einer Ebene liegen, die parallel ist zu einer Ebene, innerhalb derer die Greifelemente bewegbar sind. Diese Standfläche kann beispielsweise als Auflagefläche der Greifvorrichtung auf Stückgut genutzt werden. Die Standfläche kann z.B. die Form eines Kreisrings haben. Stattdessen sind aber auch andere Formen der Standfläche möglich, beispielsweise die Form einer durchgehenden oder unterbrochenen Umfangslinie eines Polygons.

Wenn die Greifvorrichtung an einer Unterseite des Luftfahrzeugs befestigt ist, kann das Führungsmittel auch als Landegestell des Luftfahrzeugs dienen. Dann kommt das Luftfahrzeug bei einer Landung auf einem Untergrund, wie beispielsweise einer Oberseite eines Stückguts, auf den Standflächen des Führungsmittels zu stehen. Zur Aufnahme des Stückguts kann es insbesondere vorgesehen sein, dass die Greifvorrichtung sich senkt, bis die ein- oder mehrteilige Standfläche auf der Oberseite des Stückguts aufliegt. Vor der Landung kann das Führungsmittel in diesem Fall zur seitlichen Führung des ganzen Luftfahrzeugs dienen, so dass das Luftfahrzeug beispielsweise beim Herabsenken auf einen exponierten Teil eines Stückguts durch eine Berührung zwischen dem Führungsmittel und dem Stückgut so über das Stückgut geführt wird, dass der exponierte Teil des Stückguts innerhalb der Aufnahmeöffnung zu liegen kommt.

In weiteren Ausgestaltungen weist die Greifvorrichtung einen Rotor oder mehrere Rotoren zur seitlichen Bewegung der Greifvorrichtung auf. In dieser Ausgestaltung eignet sich die Greifvorrichtung insbesondere für eine schwingende Aufhängung an dem Luftfahrzeug, beispielsweise mit einem Seil. Durch die Rotoren kann die Greifvorrichtung bei einem Absenken auf das Stückgut so seitlich bewegt werden, dass die Greifvorrichtung einen exponierten Teil des Stückguts beziehungsweise einen an diesem befestigten Adapter umschließt.

Eine weitere Ausgestaltung sieht vor, dass das Transportsystem einen Adapter und ein unbemanntes Luftfahrzeug mit einer Greifvorrichtung beschriebener Art umfasst. Hierbei ist der Adapter typischerweise zur Befestigung an dem Stückgut eingerichtet. Außerdem weist der Adapter zumindest in einem oberen Bereich einen Durchmesser auf, welcher kleiner ist als der größtmögliche Durchmesser der Aufnahmeöffnung. Dabei weist der Adapter in dem oberen Bereich eine Angriffsfläche für die Greifelemente auf, die nach oben hin durch einen seitlichen Vorsprung begrenzt wird. Durch diesen seitlichen Vorsprung wird erreicht, dass der Adapter durch die Greifvorrichtung formschlüssig gehalten werden kann. Auf diese Weise wird erreicht, dass eine auf die Greifelemente ausgeübte Kraft im Wesentlichen senkrecht auf einer Bewegungsrichtung der Greifelemente steht. Durch eine Verwendung eines derartigen Systems können Stückgüter unterschiedlicher Form sicher von der Greifvorrichtung aufgenommen und gehalten werden.

Der Adapter ist in manchen Ausführungen auch zur Befestigung an anderen Strukturen wie beispielsweise Wänden und/oder Decken eingerichtet. In diesem Fall kann es vorgesehen sein, dass die Greifvorrichtung durch den Adapter formschlüssig gehalten wird. Dadurch kann beispielsweise das unbemannte, mit der Greifvorrichtung verbundene Luftfahrzeug an dem Adapter zu dessen Lagerung an dem Adapter aufgehängt werden. Auch ist es möglich, dass eine weitere Greifvorrichtung zum Halten des Luftfahrzeugs an einer Oberseite des unbemannten Luftfahrzeugs so befestigt ist, dass diese von oben zugänglich ist. In manchen Ausführungen kann es vorgesehen sein, dass das unbemannte Luftfahrzeug selbständig einen an einer Zimmerdecke angeordneten Adapter ansteuert und diesen mit den Greifelementen derart umgreift, dass die Greifvorrichtung und das Luftfahrzeug beispielsweise zur flurfreien Lagerung des Luftfahrzeugs dauerhaft gehalten wird. Für diese Form der Lagerung wird nach dem Umgreifen des Adapters durch die Greifelemente typischerweise keine aktive Klemmung der Greifelemente beziehungsweise keine Energiezufuhr benötigt.

In weiteren Ausführungen weist der Adapter elektrische Kontakte auf, die eingerichtet sind, mit Anschlüssen an der Greifvorrichtung oder an dem unbemannten Luftfahrzeug verbunden zu werden, wenn die Greifvorrichtung den Adapter hält oder von diesem gehalten wird. Auf diese Weise lässt sich eine Ladefunktion realisieren, bei der ein Akkumulator der Greifvorrichtung beziehungsweise des unbemannten Luftfahrzeugs über die Anschlüsse und die Kontakte geladen wird.

Typischerweise weist das System eine Höhendifferenz zwischen der Angriffsfläche und einer Unterseite des Adapters auf, welche einem Abstand zwischen der Ebene, innerhalb derer die Greifelemente bewegbar sind, und der Ebene, in der die Standfläche liegt, entspricht oder geringfügig größer ist. Die Höhendifferenz zwischen der Angriffsfläche und der Unterseite des Adapters ist zu verstehen als ein kürzester Abstand zwischen einem obersten Punkt auf der Angriffsfläche und einem Punkt auf der Unterseite des Adapters. Sofern mehrere Ebenen existieren, innerhalb derer die Greifelemente bewegbar sind, so ist mit der oben genannten Ebene eine oberste dieser mehreren Ebenen gemeint. Durch diese Ausgestaltung wird erreicht, dass die Greifelemente den Adapter auf Höhe der Angriffsfläche greifen können, wenn die Greifvorrichtung mit ihrer Standfläche auf einer Oberseite eines Stückguts ruht. Das gilt jedenfalls dann, wenn das Stückgut an dieser Oberseite eine ebene Fläche aufweist und der Adapter an seiner Unterseite an der ebenen Fläche des Stückguts befestigt ist. Die vorgeschlagene Dimensionierung sorgt dann in vorteilhafter Weise dafür, dass der obere Bereich des Adapters automatisch hinreichend weit in die Aufnahmeöffnung hineinragt, wenn die Greifvorrichtung über dem Adapter auf das Stückgut abgesenkt worden ist.

Bei dem vorgeschlagenen Transportsystem ist die Greifvorrichtung an einer Unterseite des unbemannten Luftfahrzeugs befestigt oder aufgehängt und von unten zugänglich oder ein von unten zugänglicher Bestandteil eines Rumpfs oder eines Anbauteils des unbemannten Luftfahrzeugs. In typischen Ausführungen ist die Greifvorrichtung so an der Unterseite des unbemannten Luftfahrzeugs befestigt, dass die Greifvorrichtung starr mit dem Luftfahrzeug verbunden ist. Das Transportsystem eignet sich beispielsweise für eine Auslieferung von Paketen.

Ausführungsbeispiele der Erfindung werden nachfolgend anhand der Abbildungen beschrieben. Es zeigen
- Fig. 1: eine perspektivische Ansicht einer Greifvorrichtung zur Aufnahme von Stückgut von oben,
- Fig. 2: eine Aufsicht auf irisblendenartig ausgeführte Greifelemente dieser Greifvorrichtung,
- Fig. 3: einen Querschnitt eines die Greifvorrichtung und einen Adapter umfassenden Systems vor der Aufnahme eines Stückguts,
- Fig. 4: einen Querschnitt desselben Systems während des Greifens des Stückguts,
- Fig. 5: einen Querschnitt desselben Systems nach dem Greifen des Stückguts,
- Fig. 6: eine Seitenansicht eines Transportsystems, umfassend ein Transportmittel und eine Greifvorrichtung, sowie ein Stückgut mit einem darauf befestigten Adapter sowie
- Fig. 7: eine Seitenansicht eines Transportsystems gemäß einem weiteren Ausführungsbeispiel.

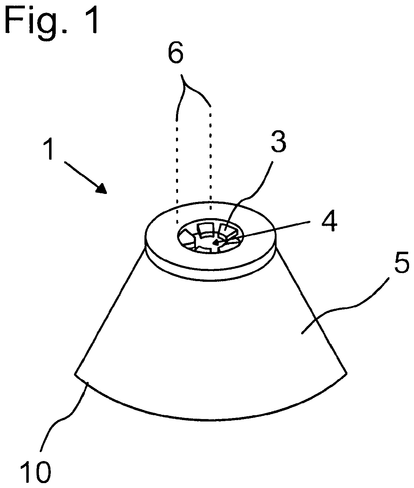

Fig. 1 zeigt eine Greifvorrichtung 1 für die Aufnahme von Stückgut von oben, die ein Führungsmittel 5 sowie Greifelemente 3 umfasst. Das Führungsmittel 5 ist in Form einer Mantelfläche eines Kegelstumpfes ausgeführt, so dass es an einem unteren Ende einen größeren inneren Durchmesser aufweist als an einem oberen Ende. An einer Unterseite weist das Führungsmittel 5 eine Standfläche 10 auf, die beim vorliegenden Ausführungsbeispiel die Form eines Kreisrings hat. Oberhalb des Führungsmittels 5 sind die Greifelemente 3 um eine durch die Greifelemente 3 begrenzte Aufnahmeöffnung 4 angeordnet. Die Greifelemente 3 sind seitlich beweglich ausgeführt und lassen sich jeweils um eine an einem ihrer Enden befindliche vertikale Achse 6 irisblendenartig einwärts schwenken. Eine solche Schwenkbewegung hat eine Verkleinerung der Aufnahmeöffnung 4 zur Folge.

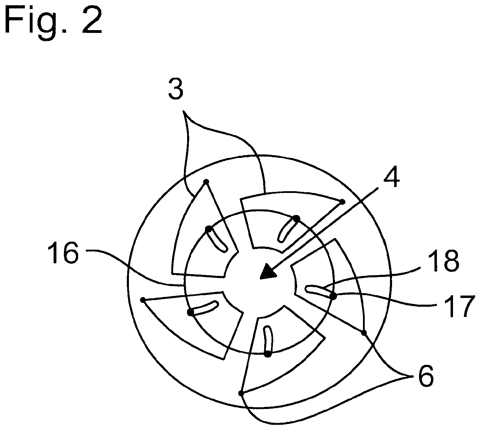

Fig. 2 zeigt eine Aufsicht auf die irisblendenartig ausgeführten Greifelemente 3, die im vorliegenden Beispiel als fünf flache Scheiben ausgeführt sind. Die innen liegenden Kanten der Scheiben begrenzen eine Aufnahmeöffnung 4. Die Scheiben sind jeweils an einem ihrer Enden schwenkbar aufgehängt. Eine Schwenkbewegung einer der Scheiben erfolgt um eine jeweilige der insgesamt fünf vertikalen Achsen 6. Außerdem ist ein drehbarer Stellring 16 vorgesehen zum synchronen Verschwenken der Greifelemente 3. Der Stellring 16 weist fünf vorstehende Mitnehmer 17 auf, welche in schlitzförmige Aussparungen 18 in den Greifelementen 3 greifen. Ein Verdrehen des Stellrings 16 gegen den Uhrzeigersinn führt zu einer Vergrößerung der Aufnahmeöffnung 4.

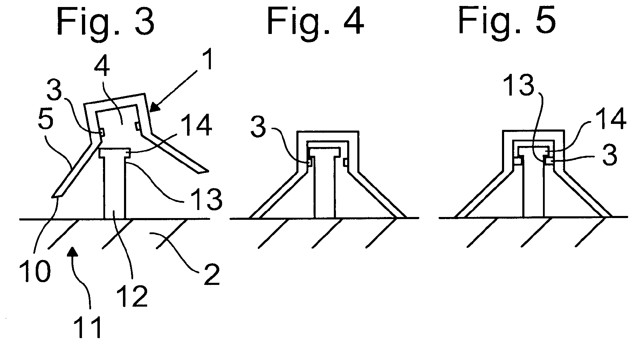

Ein System 11 aus der Greifvorrichtung 1 und einem Adapter 12 ist in Fign. 3 bis 5 dargestellt. Fig. 3 zeigt einen Moment vor einer Aufnahme. Der Adapter 12 zeichnet sich in seinem unteren Bereich durch eine Zylinderform aus und weist an einem oberen Ende eine Angriffsfläche 13 für die Greifelemente 3 auf. Die Angriffsfläche 13 wird nach oben hin durch einen ebenfalls zylinderförmigen seitlichen Vorsprung 14 begrenzt. Der Durchmesser des seitlichen Vorsprungs 14 ist kleiner als der größtmögliche Durchmesser der Aufnahmeöffnung 4, so dass die Greifvorrichtung 1 von oben bei geöffneter Stellung der Greifelemente 3 auf den Adapter 12 geführt werden kann. Zusätzlich sind der Adapter 12 und die Greifvorrichtung 1 so ausgeführt, dass eine Höhendifferenz zwischen einer Unterseite des Adapters 12 und der Angriffsfläche 13 der Höhendifferenz zwischen der Standfläche 10 und den Greifelementen 3 entspricht, die in einer zur Standfläche 10 parallelen Ebene schwenkbar sind. Der Adapter ist an einer Oberseite eines Stückguts 2 befestigt. Die Greifvorrichtung 1 bewegt sich seitlich von oben auf den Adapter 12 zu, und es kommt zu einer Berührung zwischen dem Führungsmittel 5 und dem Adapter 12, wodurch die Greifvorrichtung 1 beim Absenken so seitlich geführt wird, dass der Adapter 12 anschließend in die Aufnahmeöffnung 4 hineinragt, während die Standfläche 10 auf dem Stückgut 2 zu liegen kommt. Fig. 4 zeigt einen solchen Zeitpunkt während der Aufnahme, zu dem die Greifvorrichtung 1 mit den Greifelementen 3 den Adapter 12 umgibt, zu dem der Adapter 12 jedoch nicht in Bezug auf die Aufnahmeöffnung 4 zentriert ist. Anschließend erfolgt eine synchrone Einwärtsbewegung der Greifelemente 3, wodurch die Greifvorrichtung 1 sich seitlich zentriert und den Adapter 12 danach an der Angriffsfläche 13 hält, wie in Fig. 5 dargestellt. Bei einer anschließenden Aufwärtsbewegung der Greifvorrichtung 1 gewährleistet der seitliche Vorsprung 14 eine formschlüssige Verbindung, so dass der Adapter 12 mit dem seitlichen Vorsprung 14 auf den Greifelementen 3 aufliegt und das Stückgut 2 angehoben wird.

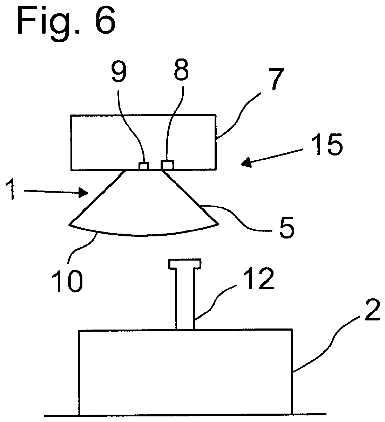

Ein Transportsystem 15, umfassend eine Greifvorrichtung 1 der zuvor beschriebenen Art und ein Transportmittel 7, sowie ein auf einem Stückgut 2 befindlicher entsprechender Adapter 12 sind in Fig. 6 dargestellt. Der Adapter 12 ist an einer Unterseite an einem um das Stückgut 2 gewickelten Umreifungsband befestigt. Das Transportmittel 7 ist als unbemanntes Luftfahrzeug oder Drohne ausgeführt. Die Greifvorrichtung 1 ist an einer Unterseite des Transportmittels 7 befestigt und starr mit dem Transportmittel 7 verbunden beziehungsweise Bestandteil eines Rumpfs beziehungsweise Anbauteils des Transportmittels 7. Die Greifvorrichtung 1 weist einen Antrieb 8, beispielsweise einen elektrischen oder pneumatischen Antrieb, zum synchronen Bewegen der Greifelemente 3 auf. Das Luftfahrzeug kann beispielsweise oberhalb der Aufnahmeöffnung eine durchgehende Öffnung aufweisen. Zusätzlich umfasst die Greifvorrichtung 1 ein Mittel 9 zur optischen Datenerfassung. Dieses ist eingerichtet, auf dem Stückgut 2 oder auf dem Adapter 12 beispielsweise in Form eines Strichcodes dargestellte Daten zu erfassen. Zusätzlich können die Greifvorrichtung 1 und/oder das Luftfahrzeug in einigen Ausführungen auch eine oder mehrere Kameras aufweisen, die eingerichtet sind, Bilddaten aufzunehmen, die beispielsweise für eine zielgenaue Ansteuerung des Adapters 12 ausgewertet werden können. In anderen Ausführungsbeispielen kann der Adapter 12 auch beispielsweise an einer Zimmerdecke befestigt sein, so dass das Transportmittel 7 durch ein Greifen des Adapters 12 an diesem aufgehängt werden kann. Hierbei kann der Adapter 12 durch die oben beschriebene Greifvorrichtung 1 oder durch eine weitere Greifvorrichtung, die beispielsweise an einer von der Greifvorrichtung 1 abgewandten Seite des Transportmittels 7 angeordnet ist, gegriffen werden. Zusätzlich kann vorgesehen sein, dass der Adapter 12 elektrische Kontakte aufweist, die zum Aufladen eines Akkumulators des Transportmittels 7 mit an diesem befindlichen Anschlüssen verbunden werden. Bei dem dargestellten Ausführungsbeispiel fungiert das Führungsmittel 5 zugleich als Landegestell der Drohne, so dass die ganze Drohne bzw. das ganze Transportmittel 7 nach einer Landung auf dem Stückgut 2 zum Zweck der Aufnahme des Stückguts 2 dort auf der Standfläche 10 zu stehen kommt.

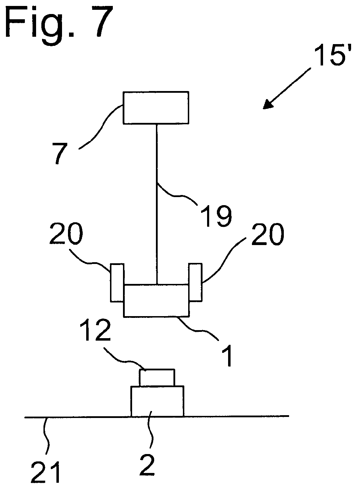

Fig. 7 zeigt ein weiteres Transportsystem 15'. Dieses unterscheidet sich von dem oben beschriebenen Transportsystem 15 dadurch, dass die Greifvorrichtung 1 mit einem Seil 19 an einer Unterseite des Transportmittels 7 schwingend aufgehängt ist. Zusätzlich umfasst die Greifvorrichtung 1 mehrere Rotoren 20, die von dem Transportmittel 7, beispielsweise einer Drohne, automatisiert ansteuerbar sind. Des Weiteren kann eine Höhe der Greifvorrichtung 1 in Bezug auf eine Höhe des Transportmittels 7 durch ein Einziehen oder Geben des Seils 19 einstellbar sein. Zusätzlich ist in der Abbildung schematisch ein auf einem Boden 21 befindliches Stückgut 2 gezeigt, An einer Oberseite des Stückguts 2 ist ein schematisch dargestellter Adapter 12 befestigt.

Zum Aufnehmen des Stückguts 2 wird zunächst das Transportmittel 7 grob oberhalb des Stückguts 2 platziert beziehungsweise das Transportmittel 7 steuert eine solche Position selbständig an. Anschließend wird die Greifvorrichtung 1 durch ein Absenken des Transportmittels 7 und/oder durch ein Geben des Seils 19 in Richtung des Bodens 21 abgesenkt. Während des Absenkens der Greifvorrichtung 1 wird diese durch die Rotoren 20 seitlich angetrieben, derart dass eine seitliche Position der Greifvorrichtung 1 so korrigiert wird, dass sich die Greifvorrichtung 1 in Richtung des Adapters 12 absenkt und diesen anschließend zum Greifen des Adapters 12 umschließt. Eine Steuerung der Rotoren 20 erfolgt hierbei automatisiert, beispielsweise anhand einer Bilderkennung durch an der Greifvorrichtung 1 angeordnete Kameras. Die Rotoren 20 werden hierbei typischerweise so angesteuert, dass einerseits der Adapter 12 durch die Greifvorrichtung 1 zielgenau angesteuert wird und dass andererseits eine horizontale Orientierung der Greifvorrichtung 1 stabilisiert beziehungsweise eingehalten wird.

## Patentansprüche

1. Transportsystem (15) umfassend ein unbemanntes Luftfahrzeug (7) und eine Greifvorrichtung (1) zur Aufnahme von Stückgut (2) von oben, umfassend bewegliche Greifelemente (3) zum Greifen des Stückguts (2) durch eine Einwärtsbewegung der Greifelemente (3), wobei
die Greifelemente (3) um eine durch die Greifelemente (3) begrenzte Aufnahmeöffnung (4) herum angeordnet sind, wobei die Greifvorrichtung (1) unterhalb der Aufnahmeöffnung (4) ein die Aufnahmeöffnung (4) umgebendes Führungsmittel (5) zur seitlichen Führung der Greifvorrichtung (1) bei einer Annäherung der Greifvorrichtung (1) an das Stückgut (2) aufweist, wobei ein innerer Durchmesser des Führungsmittels (5) an einem unteren Ende des Führungsmittels (5) größer ist als ein größtmöglicher Durchmesser der Aufnahmeöffnung (4) und wobei sich der innere Durchmesser des Führungsmittels (5) nach oben hin verjüngt, wobei die Greifvorrichtung (1) an einer Unterseite des unbemannten Luftfahrzeugs (7) befestigt oder aufgehängt und von unten zugänglich oder ein von unten zugänglicher Bestandteil eines Rumpfs des unbemannten Luftfahrzeugs (7) ist, wobei die Greifvorrichtung (1) starr mit dem unbemannten Luftfahrzeug (7) verbunden ist.

2. Transportsystem (15) nach Anspruch 1, **dadurch gekennzeichnet, dass** die Greifelemente (3) jeweils an einem Ende um eine vertikale Achse (6) schwenkbar ausgeführt sind zum irisblendenartigen Verkleinern oder Vergrößern der Aufnahmeöffnung (4).

3. Transportsystem (15) nach einem der Ansprüche 1 oder 2, **dadurch gekennzeichnet, dass** das Führungsmittel (5) in Form einer Mantelfläche eines Kegelstumpfes ausgeführt ist.

4. Transportsystem (15) nach einem der Ansprüche 1 bis3, **dadurch gekennzeichnet, dass** die Greifvorrichtung (1) einen Antrieb (8) zum synchronen Bewegen der Greifelemente (3) umfasst.

5. Transportsystem (15) nach einem der Ansprüche 1 bis 4, **dadurch gekennzeichnet, dass** die Greifvorrichtung (1), ein Mittel (9) zur optischen Datenerfassung umfasst, wobei das Mittel (9) eingerichtet ist, auf einem aufgenommenen Stückgut (2) dargestellte Daten zu erfassen.

6. Transportsystem (15) nach einem der Ansprüche 1 bis 5, **dadurch gekennzeichnet, dass** das Führungsmittel (5) an einem unteren Ende eine ein- oder mehrteilige Standfläche (10) aufweist, wobei die Standfläche (10) in einer Ebene liegt, die parallel ist zu einer Ebene, innerhalb derer die Greifelemente (3) bewegbar sind.

7. Transportsystem (15) nach einem der Ansprüche 1 bis 6, **dadurch gekennzeichnet, dass** er ferner einen Adapter (12) umfasst, der zur Befestigung an dem Stückgut (2) eingerichtet ist, wobei der Adapter (12) zumindest in einem oberen Bereich einen Durchmesser aufweist, welcher kleiner ist als der größtmögliche Durchmesser der Aufnahmeöffnung (4), und wobei der Adapter (12) in dem oberen Bereich eine Angriffsfläche (13) für die Greifelemente (3) aufweist, die nach oben hin durch einen seitlichen Vorsprung (14) begrenzt wird.

8. Transportsystem (15) nach Anspruch 7, sofern dieser auf Anspruch 6 rückbezogen ist, **dadurch gekennzeichnet, dass** eine Höhendifferenz zwischen der Angriffsfläche (13) und einer Unterseite des Adapters (12) genauso groß wie oder geringfügig größer als ein Abstand zwischen der Ebene, innerhalb derer die Greifelemente (3) bewegbar sind, und der Ebene, in der die Standfläche (10) liegt, ist.

9. Verfahren zur Aufnahme von Stückgut (2) unter Verwendung eines Transportsystems (15) nach einem der Ansprüche 1 bis 8, bei dem sich die Greifvorrichtung (1) von oben an das Stückgut (2) annähert, wobei die Aufnahmeöffnung (4) über einem exponierten Teil des Stückguts (2) oder einem am Stückgut (2) befestigten Adapter (12) durch eine seitliche Führung am Führungselement zentriert wird, wodurch sich die Greifvorrichtung (1) in der Weise senkt, dass die Greifelemente (3) den exponierten Teil des Stückguts (2) bzw. den am Stückgut (2) befestigten Adapter (12) umgeben, woraufhin die Greifelemente (3) einwärts bewegt werden, so dass die Greifvorrichtung (1) den exponierten Teil des Stückguts (2) bzw. den am Stückgut (2) befestigten Adapter (12) anschließend so hält, dass das Stückgut (2) bei einer folgenden Aufwärtsbewegung der Greifvorrichtung (1) angehoben wird.

10. Verfahren zur Aufnahme von Stückgut (2) nach Anspruch 9, **dadurch gekennzeichnet, dass** die Greifvorrichtung (1) sich senkt, bis eine ein- oder mehrteilige Standfläche (10) an einem unteren Ende des Führungsmittels auf einer Oberseite des Stückguts (2) aufliegt.

## Claims

1. A transport system (15) comprising an unmanned aircraft (7) and a gripping device (1) for receiving piece objects (2) from above, comprising movable gripping elements (3) for gripping the piece object (2) by way of an inwards movement of the gripping elements (3),wherein the gripping elements (3) are arranged around a receiving opening (4) which is delimited by the gripping elements (3),
wherein the gripping device (1) comprises, below the receiving opening (4), a guide means (5) which surrounds the receiving opening (4) for the lateral guidance of the gripping device (1) when the gripping device (1) approaches the piece object (2),
wherein an inner diameter of the guide means (5) at a lower end of the guide means (5) is larger than a largest possible diameter of the receiving opening (4) and
wherein the inner diameter of the guide means (5) tapers upwards, wherein the gripping device (1) is fastened to or suspended on a lower side of the unmanned aircraft (7) and is accessible from below or is a constituent of a fuselage of the unmanned aircraft (7), said constituent being accessible from below, wherein the gripping device (1) is rigidly connected to the unmanned aircraft (7).

2. The transport system (15) according to claim 1, **characterized in that** the gripping elements (3) are each arranged in a manner pivotable about a vertical axis (6) at one end for an iris-shutter-like size reduction or enlargement of the receiving opening (4).

3. The transport system (15) according to any one of the claims 1 or 2, **characterized in that** the guide means (5) has the shape of a lateral surface of a truncated cone.

4. The transport system (15) according to any one of the claims 1 to 3, **characterized in that** the gripping device (1) comprises a drive (8) for synchronously moving the gripping elements (3).

5. The transport system (15) according to any one of the claims 1 to 4, **characterized in that** the gripping device (1) comprises an optical data detector (9), wherein the optical data detector (9) is configured to detect data represented on a received piece object (2).

6. The transport system (15) according to any one of the claims 1 to 5, **characterized in that** the guide means (5) comprises a single-part or multi-part standing surface (10) at a lower end, wherein the standing surface (10) lies in a plane that is parallel to a plane within which the gripping elements (3) are movable.

7. The transport system (15) according to any one of the claims 1 to 6, **characterized in that** it further comprises an adapter (12) which is configured for being fastened to the piece object (2), wherein the adapter (12) at least in an upper region has a diameter that is smaller than the largest possible diameter of the receiving opening (4), and wherein the adapter (12) in the upper region comprises an engagement surface (13) for the gripping elements (3), said engagement surface being delimited to the top by a lateral projection (14).

8. The transport system (15) according to claim 7, inasmuch as the latter refers back to claim 6, **characterized in that** a height difference between the engagement surface (13) and a lower side of the adapter (12) is just as large as or slightly larger than a distance between the plane within which the gripping elements (3) are movable and the plane in which the standing surface (10) lies.

9. A method for receiving piece objects (2) using a transport system (15) according to according to any one of the claims 1 to 8, concerning which the gripping device (1) approaches the piece object (2) from above, wherein the receiving opening (4) is centered over an exposed part of the piece object (2) or over an adapter (12) which is fastened to the piece object (2), by way of a lateral guidance on the guide, lowering the gripping device (1) in a manner such that the gripping elements (3) surround the exposed part of the piece object (2) or the adapter (12) fastened to the piece object (2), whereupon the gripping elements (3) are moved inwards so that the gripping device (1) subsequently holds the exposed part of the piece object (2) or the adapter (12) that is fastened to the piece object (2), such that the piece object (2) is lifted given a subsequent upwards movement of the gripping device (1).

10. The method for receiving piece objects (2) according to claim 9, **characterized in that** the gripping device (1) is lowered until a single-part or multi-part standing surface (10) at a lower end of the guide means lies on an upper side of the piece object (2).

## Revendications

1. Système de transport (15) comprenant un véhicule aérien sans équipage (7) et un dispositif de préhension (1) pour prélever des charges isolées (2) par le haut, comprenant des éléments de préhension mobiles (3) servant à saisir les charges isolées (2) par un mouvement des éléments de préhension (3) vers l'intérieur,
les éléments de préhension (3) étant disposés autour d'une ouverture de réception (4) délimitée par les éléments de préhension (3),
le dispositif de préhension (1) présentant au-dessous de l'ouverture de réception (4) un moyen de guidage (5) entourant l'ouverture de réception (4) et assurant le guidage latéral du dispositif de préhension (1) lorsque le dispositif de préhension (1) s'approche de la charge isolée (2),
un diamètre intérieur du moyen de guidage (5) étant plus grand à une extrémité inférieure du moyen de guidage (5) que le plus grand diamètre possible de l'ouverture de réception (4), et
le diamètre intérieur du moyen de guidage (5) s'effilant vers le haut, le dispositif de préhension (1) étant fixé ou suspendu sur une face inférieure du véhicule aérien sans équipage (7) et accessible par le bas ou étant un composant d'un fuselage du véhicule aérien sans équipage (7) accessible par le bas, le dispositif de préhension (1) étant rigidement relié au véhicule aérien sans équipage (7).

2. Système de transport (15) selon la revendication 1, **caractérisé en ce que** les éléments de préhension (3) sont réalisés chacun au niveau d'une extrémité pivotant autour d'un axe vertical (6) permettant de réduire ou d'agrandir l'ouverture de réception (4) à la manière d'un iris.

3. Système de transport (15) selon l'une des revendications 1 ou 2, **caractérisé en ce que** le moyen de guidage (5) est réalisé sous la forme d'une surface enveloppante un tronc de cône.

4. Système de transport (15) selon l'une quelconque des revendications 1 à 3, **caractérisé en ce que** le dispositif de préhension (1) comprend un entraînement (8) pour le mouvement synchrone des éléments de préhension (3).

5. Système de transport (15) selon l'une quelconque des revendications 1 à 4, **caractérisé en ce que** le dispositif de préhension (1) comprend un moyen (9) pour la saisie optique de données, le moyen (9) étant configuré pour saisir des données portées sur une charge isolée (2) reçue.

6. Système de transport (15) selon l'une quelconque des revendications 1 à 5, **caractérisé en ce que** le moyen de guidage (5) présente à une extrémité inférieure une surface d'appui (10) en un ou plusieurs éléments, la surface d'appui (10) étant située dans un plan parallèle à un plan dans lequel les éléments de préhension (3) sont mobiles.

7. Système de transport (15) selon l'une quelconque des revendications 1 à 6, **caractérisé en ce qu'**il comprend en outre un adaptateur (12) qui est agencé pour être fixé sur la charge isolée (2), l'adaptateur (12) présentant au moins dans une zone supérieure un diamètre inférieur au plus grand diamètre possible de l'ouverture de réception (4), et l'adaptateur (12) présentant dans la zone supérieure une surface d'ancrage (13) pour les éléments de préhension (3) qui est délimitée vers le haut par une saillie latérale (14).

8. Système de transport (15) selon la revendication 7, dans la mesure où celle-ci renvoie à la revendication 6, **caractérisé en ce qu'**une différence de hauteur entre la surface d'ancrage (13) et une face inférieure de l'adaptateur (12) est aussi grande ou légèrement supérieure à une distance entre le plan dans lequel les éléments de préhension (3) sont mobiles et le plan dans lequel se trouve la surface d'appui (10).

9. Méthode de prélèvement de charges isolées (2) à l'aide d'un système de transport (15) selon l'une quelconque des revendications 1 à 8, dans laquelle le dispositif de préhension (1) s'approche de la charge isolée (2) par le haut, l'ouverture de réception (4) étant centrée au-dessus d'une partie exposée de la charge isolée (2) ou d'un adaptateur (12) fixé sur la charge isolée (2) par un guidage latéral sur l'élément de guidage, le dispositif de préhension (1) s'abaissant de telle sorte que les éléments de préhension (3) entourent la partie exposée de la charge isolée (2) ou l'adaptateur (12) fixé sur la charge isolée (2), à la suite de quoi les éléments de préhension (3) font un mouvement vers l'intérieur de sorte que le dispositif de préhension (1) maintient ensuite la partie exposée de la charge isolée (2) ou l'adaptateur (12) fixé sur la charge isolée (2) de telle sorte que la charge isolée (2) est soulevée lors d'un mouvement ascendant suivant du dispositif de préhension (1).

10. Méthode de prélèvement de charges isolées (2) selon la revendication 9, **caractérisé en ce que** le dispositif de préhension (1) s'abaisse jusqu'à ce qu'une surface d'appui (10) en un ou plusieurs éléments d'une extrémité inférieure du moyen de guidage repose sur une face supérieure de la charge isolée (2).
